# EUROPÄISCHE PATENTSCHRIFT

(11) **EP 0 907 535 B1**
(45) Veröffentlichungstag und Bekanntmachung des Hinweises auf die Patenterteilung: **13.09.2000**
(21) Anmeldenummer: 97930387.2
(22) Anmeldetag: 24.06.1997
(51) Int. Cl.: B60T 8/48, B60T 8/24

(54) **HYDRAULISCHE BREMSANLAGE MIT EINER VORLADEEINRICHTUNG**
HYDRAULIC BRAKE SYSTEM WITH A PRECHARGING DEVICE
INSTALLATION DE FREINAGE HYDRAULIQUE POURVUE D'UN DISPOSITIF DE PRECHARGE

(30) Priorität: 01.07.1996 DE 19626304
(43) Veröffentlichungstag der Anmeldung: 14.04.1999
(73) Patentinhaber: Continental Teves AG & Co. oHG, 60488 Frankfurt (DE)
(72) Erfinder: HINZ, Axel, D-61267 Neu-Anspach (DE); BECK, Erhard, D-35781 Weilburg (DE); JUNG, Michael, D-65551 Limburg (DE); REINARTZ, Hans-Dieter, D-60439 Frankfurt am Main (DE)
(74) Vertreter: Blum, Klaus-Dieter
(86) Internationale Anmeldenummer: EP9703295
(87) Internationale Veröffentlichungsnummer: WO9800322

(56) Entgegenhaltungen:
- EP-A- 0 460 408
- EP-A- 0 606 840
- WO-A-96/02409
- WO-A-96/10507
- WO-A-96/14228
- WO-A-96/15926
- WO-A-97/06040
- DE-A- 3 337 545
- DE-A- 4 025 859
- DE-C- 4 329 140
- PATENT ABSTRACTS OF JAPAN vol. 18, no. 335 (M-1627), 24.Juni 1994 & JP 06 080071 A (SUMITOMO ELECTRIC IND LTD), 22.März 1994,

## Beschreibung

Die vorliegende Erfindung betrifft eine hydraulische Bremsanlage gemäß dem Oberbegriff des Anspruchs 1. Eine derartige Bremsanlage ist beispielsweise aus der DE 40 25 859 A1 bekannt. Die bekannte Bremsanlage weist eine Vorderachs-Hinterachs-Bremskreisaufteilung auf, wobei ein Bremskreis einer nicht angetriebenen Achse und ein Bremskreis einer angetriebenen Achse zugeordnet ist. Der Bremskreis der angetriebenen Achse ist mit einer Einrichtung zur Antriebsschlupfregelung ausgestattet. Eine Antriebsschlupf-regelung ist eine Form der Aktivbremsung, da ein Bremseneingriff ohne Betätigung des Bremspedals vorgenommen wird. Weitere Formen der Aktivbremsung sind beispielsweise Bremseneingriffe zur Giermomentenregelung ohne Beteiligung des Fahrers.

Bei einer Bremsschlupfregelung arbeitet die bekannte Bremsanlage nach dem Rückförderprinzip und ist zur Antriebsschlupfregelung mit einer Vorladepumpe für die Rückförderpumpe ausgestattet. Die Vorladepumpe ist mit ihrer Saugseite an den Vorratsbehälter der Bremsanlage angeschlossen und mit ihrer Druckseite über ein hydraulisch betätigtes Schaltventil mit der Saugseite der Rückförderpumpe verbunden. Wenn der Förderdruck der Rückförderpumpe den Maximaldruck erreicht, welcher im Bremssystem während einer Antriebsschlupfregelung vorgesehen ist, durchströmt das geförderte Druckmittel ein Druckbegrenzungsventil und gelangt in die Steuerleitung für das hydraulisch betätigte Schaltventil zwischen der Vorladepumpe und der Rückförderpumpe. Im weiteren Verlauf der Antriebsschlupfregelung wird so lange kein Vorladevolumen und an die Rückförderpumpe weitergegeben, bis der Druck in der Steuerleitung soweit abgesunken ist, daß das Schaltventil wieder öffnet. Der Sinn dieser Maßnahme ist derjenige, daß vermieden werden soll, unnötiges Druckmittelvolumen durch die Rückförderpumpe fördern zu lassen. Die Rückförderpumpe soll nur dann einen Druck erzeugen, wenn dieser auch benötigt wird. Anstatt also überflüssig gefördertes Volumen aber ein Überdruckventil in den Vorratsbehälter der Bremsanlage abfließen zu lassen, wird die Saugseite der Rückförderpumpe so lange gesperrt, bis wieder eine Förderung notwendig ist.

Aus der DE 43 29 140 C ist eine hydraulische Bremslage mit Bremsschlupfregelung und einem aktiven Bremskraftverstärker bekannt. In der DE 43 29 140 C gibt es keine Aussage über die Rückförderpumpen und die Schaltventile.

Bei der Verwendung eines aktiven Bremskraftverstärkers und eines Hauptzylinders als Vorladeeinrichtung wird die Rückförderpumpe durch die Vorladeeinrichtung im Aktivbremsmodus stark belastet und verschleißt vorzeitig. Große auftretende Leckagen führen dann im Extremfall zum Ausfall der Elektromotoren der Pumpen. Eine tauchdichte Ausführung der Elektromotoren wäre aber mit erheblichem Aufwand verbunden.

Aus der WO 96/02409 A ist ebenfalls eine hydraulische Bremsanlage mit Bremsschlupfregelung und einem aktiven Bremskraftverstärker bekannt. In der WO 96/02409 A gibt es ebenfalls keine Aussagen über die Rückförderpumpen und die Schaltventile.

Gemäß der Lehr dieser Schrift wird der aktive Bremskraftverstärker zum Vorfüllen der Radbremsen verwendet. Nach Beendigung des Vorfüllens wird der Bremskraftverstärker mit der Saugseite der Rückförderpumpen verbunden.

Aus der WO96/15926 A ist eine hydraulische Bremsanlage mit Bremsschlupfregelung nach dem Rückförderprinzip bekannt. Die Rückförderpumpen sind bei dieser Anlage selbstansaugend ausgeführt. Während einer Aktivbremsung wird durch die Rückförderpumpen Bremsflüssigkeit aus dem Hauptzylinderreservoir durch den Hauptzylinder und ein zwischen Hauptzylinder und Rückförderpumpen angeordnetes Ventil angesaugt. Um das Öffnen dieser Ventile bei getretenem Bremspedal zu vereinfachen (weniger Kraft) bzw. diese Ventile kleiner zu bauen, ist die Anwendung von Vorsteuerventilen vorgesehen, bei welchen bei einem großen Druckgefälle zwischen Hauptzylinder und Rückförderpumpen (getretenes Bremspedal) zuerst als Vorsteuerventil und danach, erst bei einem geringeren Druckgefälle, das Hauptventil mit großem Durchlaß öffnet. Der große Durchlaß wird benötigt um die Rückförderpumpen während einer Aktivbremsung möglichst verlustfrei ansaugen zu lassen, weil es keine Vorladung gibt.

Der vorliegenden Erfindung liegt daher die Aufgabe zugrunde, eine hydraulische Bremsanlage der eingangs genannten Art zu schaffen, welche mit einem aktiven Bremskraftverstärker zur Aktivbremsung versehen ist, und bei welcher die Rückförderpumpe einem veringerten Verschleiß unterworfen ist. Diese Aufgabe wird durch die Merkmale des Anspruchs 1 gelöst.

Das Prinzip der Erfindung liegt darin, bei einer Aktivbremsung von vornherein den Druck an der Saugseite der Rückförderpumpe erst gar nicht so hoch ansteigen zu lassen, daß eine Beschädigung auftreten könne, indem die Druckmittelzufuhr während einer Vorladung abhängig vom Druckgefälle zwischen Vorladeeinrichtung und Saugseite der Rückförderpumpe gesteuert wird. Ausschlaggebend für eine Reduzierung der Druckmittelzufuhr ist also nicht mehr der Förderdruck der Rückförderpumpe.

Ein Magnetventil mit hydraulisch einfügbarer Drosselstelle eignet sich besonders dazu, den Druckmittelstrom zur Saugseite der Pumpe zu begrenzen.

Die Drosselstelle kann dabei so gestaltet sein, daß sie bei Öffnen des Magnetventils so lange wirksam ist, wie zwischen der Vorladeeinrichtung und der Rückförderpumpe ein Druckgefälle vorherrscht. Ist die Vorladung beendet, wie es beispielsweise bei der Verwendung eines aktiven Bremskraftverstärkers nach einiger Zeit der Fall ist, kann die Drossel aufgeschaltet werden, so daß sich ein größerer Ventildurchgang öffnet. Dann nämlich kann bei der selbstansaugenden Rückförderpumpe über einen großen Öffnungsquerschnitt des Ventils Druckmittel nachgesaugt werden.

Eine nähere Erläuterung des Erfindungsgedankens erfolgt nun anhand der Beschreibung eines Ausführungsbeispiels der Erfindung in zwei Figuren. Es zeigt:
- Fig. 1: eine erfindungsgemäße Bremsanlage mit einemelektromagnetisch betätigten Schaltventil in der Verbindung zwischen Vorladeeinrichtung und Rückförderpumpe,
- Fig. 2: das elektromagnetisch betätigte Schaltventil aus Fig. 1 in vergrößerter Darstellung mit einer hydraulisch einfügbaren Drosselstelle.

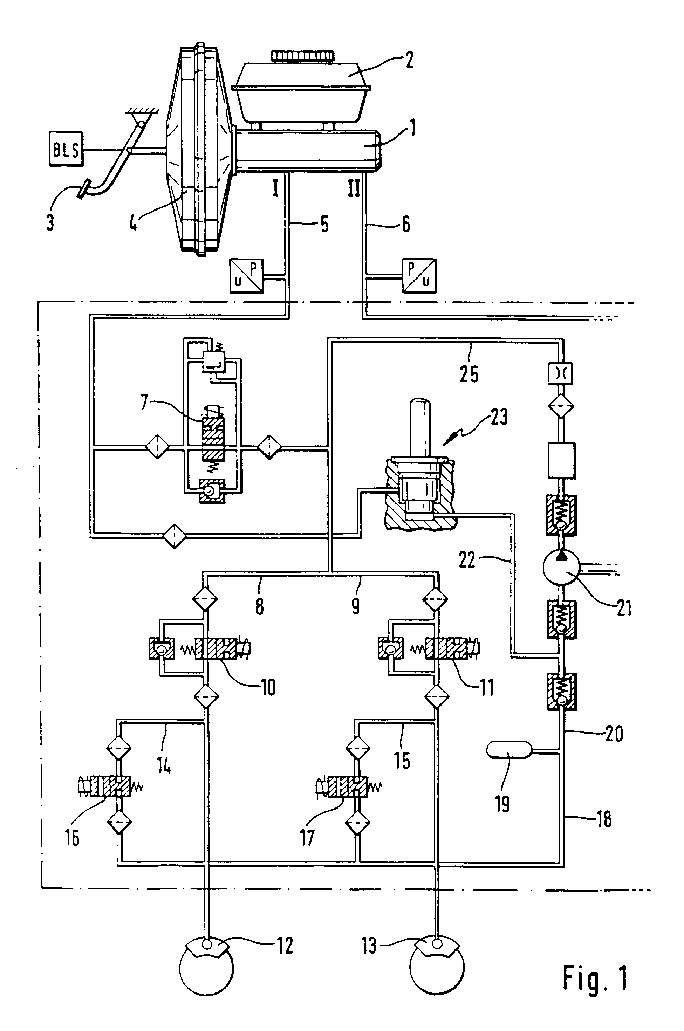

Die Bremsanlage nach Fig. 1 besitzt einen Hauptzylinder 1, der an einen Vorratsbehälter 2 angeschlossen ist und von einem Bremspedal 3 über einen Vakuumbremskraftverstärker 4 betätigbar ist. Der Bremskraftverstärker 4 ist als aktiver Bremskraftverstärker ausgebildet. Das heißt, daß auch ohne Betätigung des Bremspedals 3 der Bremskraftverstärker 4 in der Lage ist, durch elektrische Ansteuerung die Betätigungskolben des Hauptzylinders 1 zu verschieben und in der Bremsanlage einen gewissen Druck aufzubauen. Vom Hauptzylinder 1 verlaufen zwei Bremsleitungen 5 und 6 zu den jeweiligen Bremskreisen. Im Detail ist nur der Bremskreis I dargestellt, wobei der Bremskreis II entweder identisch aufgebaut sein kann oder aber beispielsweise bei einer Bremsanlage mit Antriebsschlupfregelung und Vorderachs-Hinterachs-Bremskreisaufteilung nur mit einer Blockierschutzeinrichtung versehen sein kann. Der Bremskreis I also verläuft vom Hauptzylinder 1 über die Bremsleitung 5, ein Trennventil 7 und zwei Bremszweigleitungen 8 und 9 mit jeweils einem Einlaßventil 10 bzw. 11 zu den Radbremsen 12 und 13. Von den Radbremsen 12 und 13 führt jeweils ein Rücklaufzweig 14 bzw. 15 über jeweils ein Auslaßventil 16 bzw. 17 zu einer Rücklaufleitung 18, welche an einen Niederdruckspeicher 19 angeschlossen ist. Der Niederdruckspeicher 19 ist über eine erste Saugleitung 20 mit der Saugseite einer selbstansaugenden Rückförderpumpe 21 verbunden. Diese weist eine zweite Saugleitung 22 auf, in welche ein elektromagnetisch betätigtes Schaltventil 23 eingefügt ist. Die zweite Saugleitung 22 ist an die Bremsleitung 5 zwischen Hauptzylinder 1 und Trennventil 7 angeschlossen. Eine Druckleitung 25 verbindet die Druckseite der Rückförderpumpe 21 mit der Bremsleitung 5 zwischen Trennventil 7 und den Einlaßventilen 10 und 11.

Bei einer Normalbremsung, also bei einer pedalbetätigten Bremsung ohne kritische Schlupfwerte oder andere kritische fahrdynamische Faktoren verbleiben alle Ventile in ihrer dargestellten Position. Der Druckaufbau in den Radbremsen 12 und 13 erfolgt über die Bremsleitung 5 und die Bremszweige 8 und 9. Auf dem selben Weg wird der Druck auch wieder abgebaut.

Bei einer Blockierschutzregelung arbeitet die Bremsanlage nach dem Rückförderprinzip, welches an sich bekannt ist. Das elektromagnetische Schaltventil 23 bleibt geschlossen und das Trennventil 7 bleibt geöffnet. Lediglich die Einlaßventile 10 und 11 und die Auslaßventile 16 und 17 werden auf bekannte Weise zur Druckregelung in den Radbremsen 12 und 13 geschaltet. Die Rückförderpumpe 21 verbringt das in den Niederdruckspeicher 19 abgelassene Druckmittel über die Druckleitung 25 wieder in die Bremsleitung 5 zwischen Trennventil 7 und den Einlaßventilen 10 und 11.

Bei einer Aktivbremsung, beispielsweise einer Antriebschlupfregelung oder einem aktiven Bremseneingriff zum Zwekke einer Giermomentenregelung wird das Trennventil 7 geschlossen. Der Bremskraftverstärker 4 betätigt den Hauptzylinder 1, so daß sich durch die Bremsleitung 5 ein Druckmitteldruck in der zweiten Saugleitung 22 bis zum elektromagnetisch betätigten Schaltventil 23 fortpflanzt.

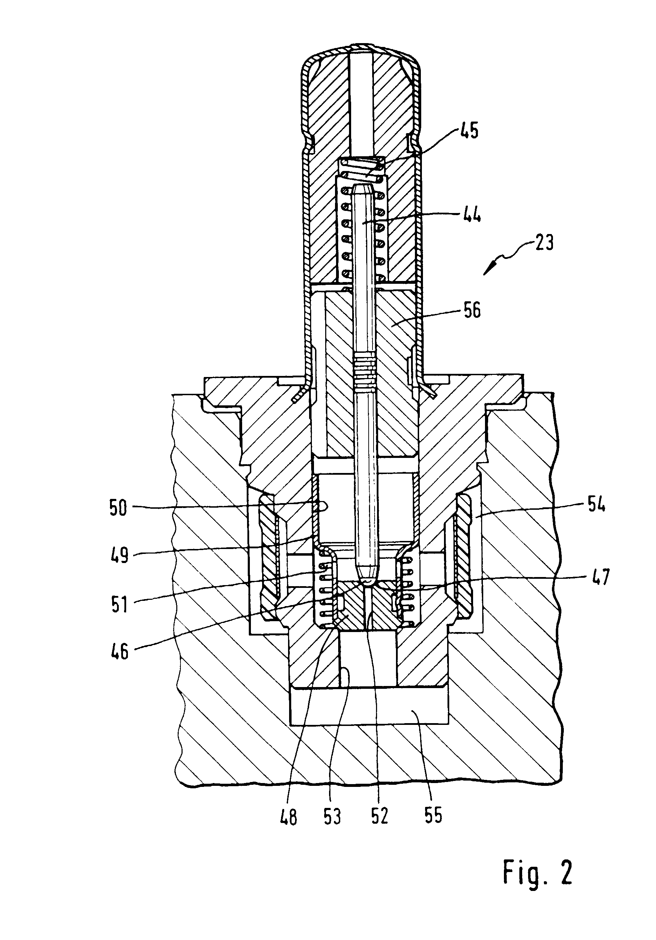

Dieses ist, wie Fig. 2 zeigt, als SG-Ventil gestaltet, wobei der Ventilstößel 44 in Ventilschließrichtung von einer Druckfeder 45 beaufschlagt ist. Die Spitze des Ventilstößels 44 weist ein Schließglied 46 auf, welches mit einem Ventilsitz 47 zusammenwirkt, der an einem Ventilkörper 48 angeformt ist. Der Ventilkörper 48 ist in eine metallische Hülse 49 eingeprägt, welche axial verschiebbar in der Bohrung 50 geführt ist. Die metallische Hülse 59 ist von einer gegenüber der Druckfeder 45 sehr schwach ausgelegten Druckfeder 51 zum Stößel 44 hin beaufschlagt. Der Ventilkörper 48 selbst weist eine zentrale Drosselstelle 52 auf, welche durch Anlage des Ventilschließglieds 46 am Ventilsitz 47 verschlossen wird. Außerdem dient der Ventilkörper 48 als Schließglied für einen weiteren Ventildurchgang 53, welcher einen im Vergleich zur Drosselstelle 52 erheblich größeren Querschnitt aufweist.

Stößelseitig vom Ventilkörper 48 ist die Einlaßkammer 54 des Ventils angeordnet, während auf der anderen Seite der Drosselstelle 52 und des Ventildurchgangs 53 die Auslaßkammer 55 angeordnet ist.

Dieses elektromagnetisch betätigte Schaltventil eignet sich insbesondere für solche Bremsanlagen, welche mit einer erschöpfbaren Vorladeeinrichtung und mit einer selbstansaugenden Rückförderpumpe ausgestattet sind. Dies erklärt sich wie folgt: Läuft zum Zwecke einer Aktivbremsung eine Vorladung, so wird von einer Magnetspule der am Stößel 44 starr befestigte Magnetanker bewegt, so daß sich das Schließglied 46 von seinem Ventilsitz 47 abhebt. Aufgrund des zwischen Einlaßkammer 54 und der Auslaßkammer 55 herrschenden Druckgefälles verbleibt jedoch der Ventilkörper 48 in seiner dargestellten Position, in welcher er den Ventildurchgang 53 größeren Querschnittes verschließt. Die Vorladung kann demnach nur über die Drosselstelle 52 erfolgen, so daß sich an der Saugseite der Rückförderpumpe von vornherein kein großer Druck aufbauen kann, da diese das ankommende Druckmittel sofort weiter fördert. Ist jedoch die Vorladeeinrichtung erschöpft und somit die Einlaßkammer 54 drucklos, so wird der Ventilkörper 48 von der Druckfeder 51 wieder an das Schließglied 48 des Stößels 44 geschoben, wodurch der Ventildurchgang 53 geöffnet wird. In diesem Falle kann die nun weiter ansaugende Rückförderpumpe ihr Druckmittel über einen wesentlich größeren Öffnungsquerschnitt beziehen, so daß Drosselverluste bei der weiteren Ansaugung vermieden werden.

## Patentansprüche

1. Hydraulische Bremsanlage mit Bremsschlupfregelung und einer aktiven Vorladeeinrichtung (4), mit einem Hauptzylinder (1), der an einen Vorratsbehälter (2) angeschlossen ist, mit mindestens einer Radbremse (12,13), die über eine Bremsleitung (5) mit dem Hauptzylinder (1) verbunden ist, mit einer Rückförderpumpe (21), die über eine erste Saugleitung (20) mit der Radbremse (12,13) und mit einer zweiten Saugleitung (22) mit der Vorladeeinrichtung (4) verbunden ist, wobei in der zweiten Saugleitung (22) Mittel (23) angeordnet sind, die die Druckmittelzufuhr der Vorladeeinrichtung (4) während der Aktivbremsung zur Saugseite der Rückförderpumpe (21) steuern, dadurch **gekennzeichnet,** daß die Vorladeeinrichtung (4) als ein dem Hauptzylinder (1) vorgeschalteter aktiver Bremskraftverstärker ausgebildet ist und daß durch die Mittel (23) die Druckmittelzufuhr von der Vorladeeinrichtung (4) während der Aktivbremsung zur Saugseite der Rückförderpumpe (21) abhängig vom Druckgefälle in der zweiten Saugleitung (22) der selbstansaugenden Rückförderpumpe (21) geregelt wird.

2. Bremsanlage nach Anspruch 1, dadurch **gekennzeichnet,** daß es sich bei den Mitteln (23) um ein elektromagnetisch betätigtes Ventil (23) mit hydraulisch einfügbarer Drosselstelle (52) handelt.

3. Bremsanlage nach Anspruch 2, dadurch **gekennzeichnet,** daß das elektromagnetisch betätigte Ventil (23) einen Stößel (44) aufweist, der in stromlosem Zustand die durch die verschiebbar geführten Ventilkörper (48) verlaufende Drosselstelle (52) verschließt, wobei der Ventilkörper (48) einen dem Stößel (44) gegenüberliegenden Ventildurchgang (53) kontrolliert und mittels einer Druckfeder (51) zum Stößel (44) hin beaufschlagt ist.

## Claims

1. Hydraulic brake system with brake slip control and an active precharging device (4), including a master cylinder (1) which is connected to a supply reservoir (2), at least one wheel brake (12, 13) which is connected to the master cylinder (1) by way of a brake line (5), a return pump (21) which is connected to the wheel brake (12, 13) by way of a first suction line (20) and to the precharging device (4) by way of a second suction line (22), wherein a means (23) is arranged in the second suction line (22) and controls the pressure fluid supply from the precharging device (4) to the suction side of the return pump (21) during active braking,
**characterized** in that the precharging device (4) is configured as an active brake force booster that is connected upstream of the master cylinder (1), and in that the means (23) is used to control the pressure fluid supply during active braking to the suction side of the return pump (21) as a function of the pressure gradient in the second suction line (22) of the self-priming return pump (21).

2. Brake system as claimed in claim 1,
**characterized** in that the means (23) is an electromagnetically operated valve (23) with a hydraulically insertable throttle (22).

3. Brake system as claimed in claim 2,
**characterized** in that the electromagnetically operated valve (23) includes a tappet (44) which, in the deenergized condition, closes the throttle (52) which extends through a displaceably guided valve member (48), the said valve member (48) governing a valve passage (53) that is opposite to the tappet (44) and being acted upon by a compression spring (51) towards the tappet (44).

## Revendications

1. Système de freinage hydraulique à régulation antipatinage au freinage, muni d'un dispositif actif (4) de gavage, comportant un maître-cylindre (1) relié à un réservoir (2), comportant au moins un frein de roue (12, 13) relié au maître-cylindre (1) via une conduite de frein (5), comportant une pompe de renvoi (21) reliée au frein de roue (12, 13) par l'intermédiaire d'une première conduite d'aspiration (20), et reliée au dispositif de gavage (4) par l'intermédiaire d'une seconde conduite d'aspiration, des moyens (23) étant agencés dans la seconde conduite d'aspiration (22), pilotant l'alimentation en fluide de pression du dispositif de gavage (4) au côté aspiration de la pompe de renvoi (21) pendant le freinage actif, caractérisé en ce que le dispositif de gavage (4) est configuré en tant qu'amplificateur d'effort de freinage actif aménagé en amont du maître-cylindre (1), et en ce que, pendant le freinage actif, les moyens (23) régulent l'alimentation en fluide de pression, du dispositif de gavage (4) vers le côté aspiration de la pompe de renvoi (21), en fonction de l'écart de pression régnant dans la seconde conduite d'aspiration (22) de la pompe de renvoi auto-amorçante (21).

2. Système de freinage selon la revendication 1, caractérisé en ce que, les moyens (23) consistent en une soupape (23) à commande électromagnétique comprenant un étranglement (52) pouvant être commuté hydrauliquement.

3. Système de freinage selon la revendication 2, caractérisé en ce que la soupape (23) à commande électromagnétique comporte un poussoir (44) qui, à l'état hors tension, obture l'étranglement (52) s'étendant à travers le corps de la soupape (48) guidé de façon coulissante, le corps de soupape (48) contrôlant un passage (53) de soupape qui est opposé au poussoir (44), et étant soumis à l'action d'un ressort de pression (51) agissant en direction du poussoir (44).
